# EUROPEAN PATENT APPLICATION

(11) **EP 0 528 616 A1**
(43) Date of publication of application: **24.02.1993**
(21) Application number: 92307302.7
(22) Date of filing: 10.08.1992
(51) Int. Cl.: A61C 8/00

(54) **A method of and apparatus for machining recesses**

(30) Priority: 15.08.1991 JP 205030/91
(71) Applicant: Inoue, Kiyoshi, Tokyo (JP)
(72) Inventor: Inoue, Kiyoshi, Tokyo (JP)
(74) Representative: Enskat, Michael Antony Frank

(57) **Abstract**

A method of and apparatus for machining a recess (12) adjacent a channel (11) in a bone (13) within a confined space are disclosed which may advantageous be employed, e. g. in implantology, with a dental implant having a part (7) to be anchored and a portion (8a) to be seated in the jawbone (13). A jig is used comprising a positioning member (3, 31, 32) with a guide surface (3a, 31a, 32a, 32b) and a plate or bridge (2) formed with a tool insertion aperture (2a). A tool (4) supported by a tool holder (5) is inserted into and through the aperture (2a) upon the accomplishment of lateral guidance of the tool holder (5) with the guide surface (3a, etc.) to establish a predetermined position of the recess (12) relative to the channel (11) previously machined with a cutting tool (9, 91, 10). The tool (4) is then operated to form a recess (12) adjacent and with a precisely ensured positional relationship with the channel, thus permitting the implant properly anchored with the part (7) in the channel (11) and the portion (8a) in the recess(12).

## Description

The present invention relates to bone machining technique useful, for example, in dental implantology and medical surgery. The invention particularly relates to a method of and apparatus for machining a recess adjacent a channel in a bone as well as a machining jig for use in dental or medical surgerical operations.

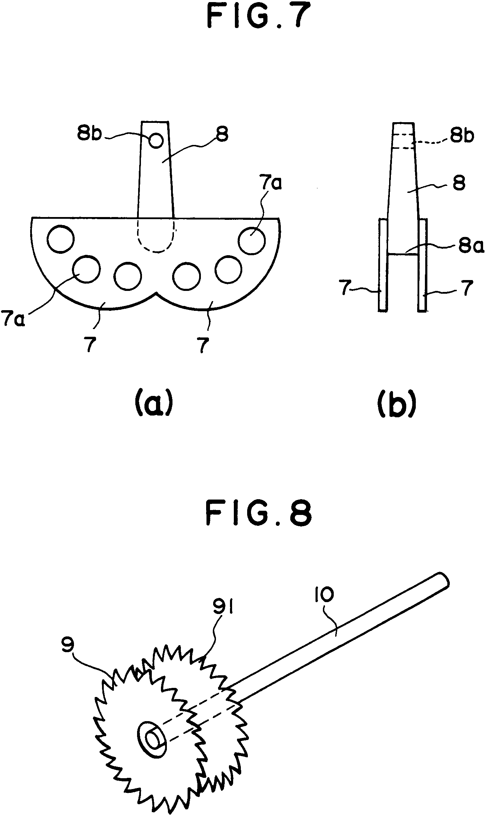

The need for precisely machining a recess adjacent a channel in a patient's bone arises, for example, in the art of dental implantology in which a blade-type implant as illustrated in F1G.7 is typically employed. The implant shown generally comprises a pair of blades 7 and a head portion 8 securely supported by and between them. Each blade 7 for implantation is here formed with a twin peak profile constituted by two contiguous arcs and is laterally formed with a number of vents 7a through which bone may regenerate. The two blades are secured in parallel and have the head portion 8 fixedly projecting into therebetween. The head portion 8 functions to support a denture or denture supporting structure. The lower end of the head portion 8 is thus formed with a projection 8a which, when the blades 7 are implanted, is designed to be also anchored in the jawbone. Formed near the top of the head portion 8 is an opening 8b that may serve to extract the implant from the jawbone.

For the implantation of such an implant in the jawbone there must be grooves and a recess machined therein. A typical cutting/grinding tool that may be employed in groove machining is illustrated in FIG. 8. The tool includes a pair of parallel cutter disks 9 and 91 securely mounted on a rotary shaft 10 and inter-spaced with a distance equal to the distance between the blades 7 of the aforementioned implant. The disks are designed to have a radius of rotation substantially equal to the arc radius of the implant blades 7, and are rotated via the rotary shaft by a motor drive unit not shown to produce a pair of groove simultaneously in the jawbone.

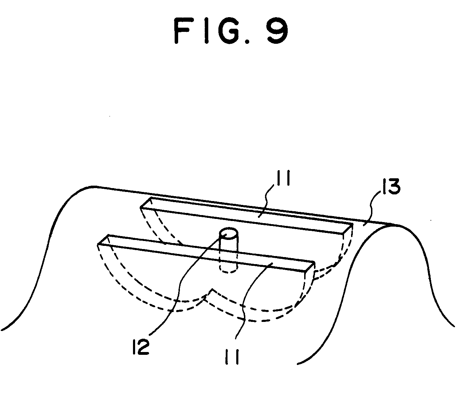

Specifically, as shown in FIG. 9, grooves 11 are machined in the jawbone 13 by using the aforementioned cutting/grinding tool with parallel cutter disks 9 and 91 simultaneously in two successive steps for a double-arc or twin-peak profile blade type implant as shown in FIG. 8. Thus, the center of rotation of the cutter disks 9, 91 is designed to lie at two positions successively so that a pair of parallel grooves 11 are concurrently machined each having a twin-peak bottom contour corresponding to the blade 7 end contour of the dental implant. In FIG. 9 there is shown a hole or recess 12 located between the grooves 11 for accepting the lower end projection 8a of the head portion 8 of the implant shown in FIG.7.

Typically, such a hole or recess 12 is machined, for example, by drilling subsequent to the machining of grooves 11 described. The facts, however, that machining is performed within a confined space of the mouth and that the hole tends to be distorted or displaced have made it virtually impractical to conduct this procedure with due precision

Accordingly, it is the principal object of the present invention to provide a method of machining a recess adjacent a channel (e. g. grooves) within a confined space with due precision.

Another object of the present invention is to provide an apparatus for carrying out the method as well as a jig means therefor.

A further object of the present invention is to provide an improved method of implantology whereby an implant can be anchored in a patient bone with increased easiness and with a high degree of retentivity.

These and other objects of the present invention are attained, in accordance with the present invention, by providing, in a first aspect thereof, a method of machining a recess adjacent a channel in a bone within a confined space with a tool supported by a tool holder, which method comprises the steps of: (a) positioning a jig having a guide surface, fixedly with respect to the channel in the bone; (b) guiding the tool holder laterally along the guide surface until the tool is set at a predetermined position relative to the channel; and forming the recess at the said predetermined position with the tool set in step (b) above.

Preferably, the tool and the tool holder are dimensioned to have a total height in their axial direction not in excess of 25 mm. The total height may be not less than 10 mm. Typically, the confined space is in a patient's mouth.

Conveniently, the tool holder has an extension lying in a plane transverse to an axis of the tool and the tool holder is rotated in a range of 90 ° for orienting the extension in a predetermined angular position with respect to the channel.

The invention also provides, in a second aspect thereof, a method of implantation in a patient's bone, which compresses the steps of: (a) preparing an implant having a part and a portion to be anchored in the patient's bone in a predetermined special relationship; (b) machining a channel in the bone for accepting the said part of the implant therein; (c) preparing a jig having a positioning member secured in position in the channel and providing a guide surface, and a tool supported by a tool holder; (d) guiding the tool holder laterally along the guide surface until the tool is set at a predetermined position relative to the positioning member corresponding to the said predetermined special relationship; (e) forming a recess at the said predetermined position in the patient's bone with the tool set in step (d); and (f) embedding the implant in the patient's bone with the said part anchored in the channel and the said portion seated in the recess.

According to specific features of the invention, the tool holder has a cylindrical outer surface and the guide surface is formed to be substantially complementary with the cylindrical outer surface of the tool holder. The bone may be a patient's jawbone and the tool holder may have an extension lying in a plane transverse to an axis of the tool and extending outwards of the mouth for manual handling by the surgeon. The tool holder may then be rotated for orienting that extension in a predetermined angular position.

The invention further provides, in a third aspect thereof, an apparatus for machining a recess adjacent a channel in a bone within a confined space, which apparatus comprises: a tool for forming a recess; a jig having a positioning member positionable securely in the channel to provide a guide surface; a tool holder supporting the tool and having a lateral surface adapted to be guided in the guide surface for locating the tool at a predetermined position relative to the channel; and drive means for operating the tool supported by the holder for forming the recess at the said predetermined position.

Preferably, the jig including the positioning member and the guide surface in a direction of depth of the said channel should have a total height not greater than 25 mm. Also, the tool and the tool holder should preferably have a total height in a direction of depth of the said recess not in excess of 25 mm. In both instances, the total height may be not less than 10 mm. Further specifically, the confined space may be in a patient mouth with the jawbone constituting the said bone and the tool holder advantageously has a grip handle for extension outsides the mouth. The tool holder may be rotatable about the tool axis in a range of at least 90 ° so that the grip handle may be oriental in a predetermined angular position for ease in the tool operation by the dental surgeon.

According to further specific features of the invention, the channel includes parallel grooves cut in a patient bone for reception of parallel blade members of a dental implant which has a head portion supported at a lower end thereof by the blade members. The positioning member includes a plurality of blades to be fittedly accepted in the grooves and a bridge member connecting the blades and formed with an aperture for reception of the tool therethrough. The jig includes a guide member for coupling with the bridge and accepting the tool holder with the guide surface.

The invention also provides, in a fourth aspect thereof, a jig for use in machining a recess adjacent a channel in a bone in a confined space with a tool supported by a tool holder, which jig comprises: a positioning member having a blade member for reception in the channel and a plate or bridge member supporting the blade or bridge member; and a guide member adapted to be coupled with the plate or bridge member and providing a guide surface along which the tool holder is adapted to be laterally guided to locate the tool at a predetermined position where the recess is to be formed in the bone. Preferably, the jig has a total height of not greater than 25 mm and not less than 10 mm.

These and other objects, features and advantages of the present will become more readily apparent from a reading of the following description made with reference to the accompanying drawings in which:
FIG.1 is a perspective view diagrammatically illustrating a jig embodying the present invention;
FIG.2 is a perspective view diagrammatically illustrating a tool assembly for use with embodiments of the invention;
FIG.3 is a perspective view diagrammatically illustrating another embodiment of the jig assembly for use in the present invention;
FIG.4 is a top plan view diagrammatically illustrating an apparatus embodying the principles of the invention;
FIG.5 is a perspective view diagrammatically illustrating a further embodiment of the jig structure according to the present invention;
FIG.6 is a perspective view diagrammatically illustrating a further different embodiment of the jig structure according to the present invention;
FIG.7(a) and FIG. 7(b) are a front elevational and a side elevational view, respectively, diagrammatically illustrating a double twin-arc blade type dental implant which may be implanted in the jawbone according to the present invention;
FIG.8 is a diagrammatic view illustrating a cutting tool which may be used in grooving for the implantation of the implant shown in FIGS. 7(a) and 7(b); and
FIG.9 is a perspective view diagrammatically illustrating a crestal ridge of the patient's bone with a pair of grooves or channel and a recess to be formed thereat for an implantation surgery according to the present invention.

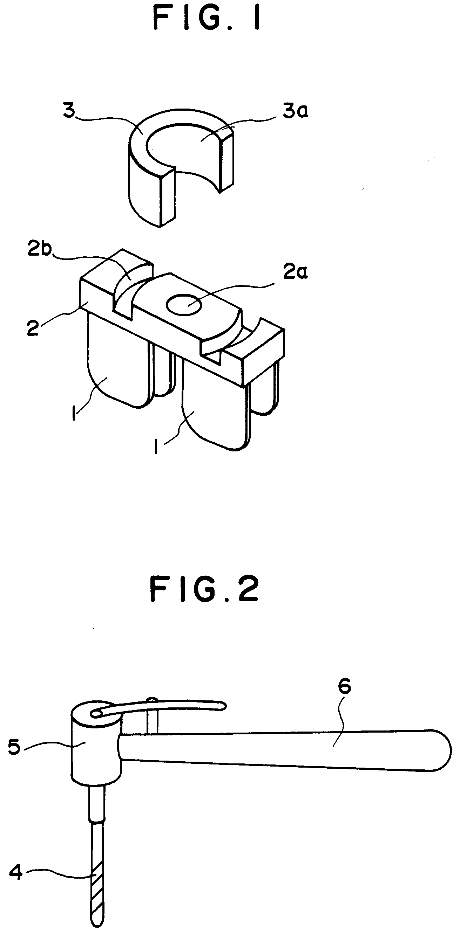

FIG.1 shows a bone machining jig according to the invention for machining a recess adjacent a channel in a bone in a confined space, e. g. the patient's jawbone in his/her mouth. Numeral 1 represents positioning blades to be matingly inserted in a pair of grooves 11 shown in FIG. 9, constituting the channel, that are machined in the jawbone for anchoring therein of the blades 7 of the implant shown in FIG. 7. Numeral 2 designates a plate or bridge connecting the upper ends of the positioning blades 1 and formed with a circular aperture 2a at a position corresponding to that of the head portion 8 of the implant shown in FIG. 7. The blades 1 and the bridge 2 of the jig constitute a positioning member. Numeral 3 designates a guide member having an arc-curved or inner-cylindrical guide surface 3a designed to guide a tool holder therein shown at 5 in FIG. 2. The guide member 3 has its lower end designed to mate with an arc-curved slit 2b formed in the bridge 2 to stay securely therein . The jig so constructed serves to establish a position of the recess 12 to be machined, by inserting the blades 7 (FIG.7) in the grooves 11 (FIG.9) previously machined in the jawbone 13 as shown in FIG.9.

FIG.2 shows an embodiment of the machining tool for the purpose of forming the recess 12 in the jawbone and includes numeral 4 designating a drilling or grinding tool securely chucked in the tool holder 5. The latter is supported by a grip handle 6 which is carried by the dental surgeon for the operation of the tool 4. The holder 5 here contains drive means 51 for the tool 4 constituted, for example, by an air turbine as is conventional and a coolant supply 52 for flushing the machining zone constituted by the tool 4.

In machining the recess 12, it should be noted that the jig is set to placing the positioning blades 1 in the channel or grooves 11 in the patient's mouth and guiding the tool holder 5 along the guide member 3 so that the tool 4 may be inserted into, through and out of the tool insertion bore 2a and then into the jawbone 13, thereby to conduct the required machining by drilling or grinding. The tool including the holder 5 is formed to have its total thickness not in excess of 25 mm, and so is the machining jig correspondingly to have its total height, from the ends of the positioning blades 1 to the guide member 3, not in excess of 25 mm, so that the tool may be stably guided by a proper amount, thus capable of appropriately machining a recess 12 accurately at a proper position without undergoing a distortion or inclination in the jawbone. When the total height of the machining jig and the tool assembly is limited to be not in excess of 25 mm, it just suffices that the patient may naturally open his/her mouth to allow the surgical machining operation to be conducted therein easily. The lower limit of the total height may be practically not less than 10 mm.

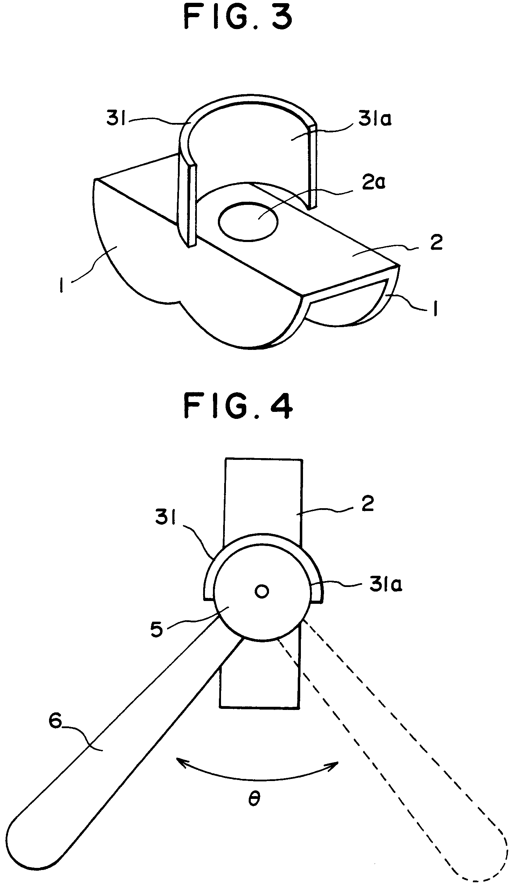

FIG. 3 shows another embodiment of the machining jig and FIG. 4 is a top plan view of the tool holder 5 while being guided thereby. In these Figures, same numerals as in FIG. 1 represent identical parts. Numeral 31 designates a guide member formed with a semi-cylindrical guide surface 31 around the center of the tool insertion aperture 2a, so that the tool holder 5 brought into guided engagement with the guide surface 31a from its open side may be turned as desired to the left and right directions about the tool axis, thus accomplishing a stabilized machining operation. By permitting it to be rotatable by at least 90 ° to effect a directional change, surgical positioning is established at almost any location in the mouth.

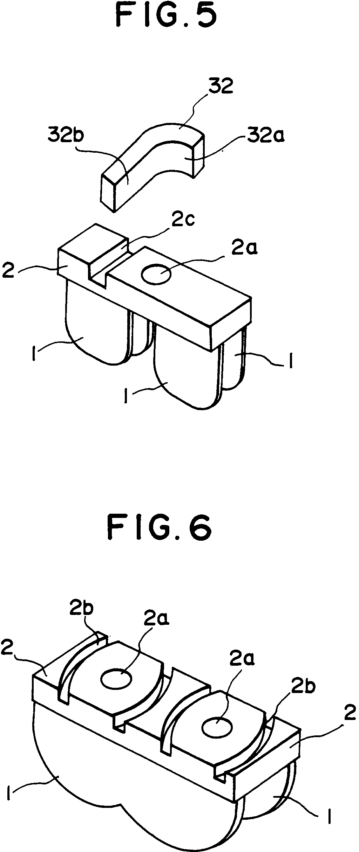

FIG. 5 shows a further different embodiment of the dental bone machining jig according to the present insertion in which numeral 32 designates a guide member having an arc-surfaced or inner-cylindrical portion 32a and also a planar surface portion 32b whose lower end is adapted to be securely fitted in a rectilinear groove 2c formed in the bridge 2. In this embodiments, the tool holder 5 can be inserted form any desired direction until it comes into engagement with the planar guide surface 32 b and then it can be guided along the arc-surfaced guide portion 32a, thus to conveniently carry out the surgical operation.

FIG. 6 shows yet another embodiment, in which the jig bridge 2 is formed with two tool insertion apertures 2a and the required machining such as drilling or grinding is performed by a tool at positions corresponding to those positions of the recess 2a on the jawbone**.** In machining, a guide member is securely engaged with slits 2b around one of the tool insertion apertures 2a and the tool holder 5 is guided therewith to accomplish the machining at that position. Thereafter, the guide member is securely engaged with ships 2b around the other tool insertion apertures 2a to finish the machining thereat. In this manner, a single guide member can be utilized for machining at both tool insertion apertures 2a. This mode of drill-machining at two locations is advantageous in bone machining as required for a double-headed implant modified from the one shown in FIG. 7 in that two heads are provided respectively at two positions where the blades 7 are arc-contoured.

The foregoing description has been made with reference to the embodiments in which a guide member is utilized that is securely fitted in a slit formed in the jig plate or bridge. These embodiments are advantageous in that the guide member and the bridge can be individually inserted in the mouth so that they may then be assembled. It is, however, possible to provide and use a jig unit in which they are assembled and joined in advance by screwing or welding. In this instance as well, the jig can easily be set in the mouth for a surgical operation by limiting the total height in the direction of depth at the time of assembling and joining to be not in excess of 25 mm, practically not less than 10 mm.

According to a jig of the present invention described hereinbefore comprising a positioning member having blades to be fittedly received in a pair of grooves that are machined in the bone and a guide member for grinding a tool holder wherein the guide member is used to guide the tool holder in a given direction about a tool insertion bore provided in the said positioning member, a surgical operation such as drilling/grinding can be performed with ease accurately at a position established by this guiding instrumentation corresponding to the tool insertion bore of the said positioning member. By virtue of this guiding instrument, the required machining comprising drilling/grinding can be accomplished with fine precision without undergoing a distortion, inclination or deviation in position that may otherwise accompany.

Yet, by limiting the total height of the jig in its depth direction to be not in excess of 25 mm, oral surgery is achieved with ease, with the patient's opening mouth well within the natural bound.

Further, with the guide member comprising an arc-curved guide surface that is adapted to uniformly guide the tool holder about the tool insertion bore of the positioning member and is adapted to be rotatable within the range of at least 90 ° about the tool axis in order to guide the tool holder, the present invention provides an extremely facilitated surgical operation that can be done at any location within the confined space by simply changing the direction in which the tool holder is oriented.

## Claims

1. A method of machining a recess (12) adjacent a channel (11) within a confined space in a bone (13) with a tool (4) supported by a tool holder (5), characterised by the steps of:
(a) positioning a jig (3, 31, 32) having a guide surface (3a, 31a, 32a, 32b), fixedly with respect to the channel (11) machined in the bone (13);
(b) guiding said tool holder (5) laterally along said guide surface (3a, 31a, 32a, 32b) until said tool (4) is set at a predetermined position relative to said channel (11) ; and
forming said recess (12) at said position with said tool (4) set in step (b).

2. A method of implantation in a patient's bone, characterised by the steps of:
(a) preparing an implant having a part (7) and a portion (8a) to be anchored in the patient's bone (13) in a predetermined special relationship;
(b) machining a channel (11) at a preselected location in the bone (13) for accepting said part (7) of the implant therein;
(c) preparing a jig having a positioning member (3, 31, 32) secured in position in said channel (11) to provide a guide surface (3a, 31a, 32a, 32b), and a tool ( 4 ) supported by a tool holder ( 5 ) ;
(d) guiding said tool holder (5) laterally along said guide surface (3a, 31a, 32a, 32b) until said tool (4) is set at a predetermined position relative to said positioning member (3, 31, 32) corresponding to said predetermined special relationship;
(e) forming a recess (12) at said predetermined position in the patient's bone . (13) with said tool (4) set in step (d); and
(f) embedding said implant in the patient's bone (13) with said part (7) anchored in said channel (11) and said portion (8a) seated in said recess (12).

3. A method according to Claim 1 or to Claim 2 characterised in that said bone (13) is a patient's jawbone.

4. A method according to any one of Claims 1 to 3 characterised in that said tool holder (5) has a cylindrical outer surface and said guide surface (3a, 31a, 32a, 32b) is formed to be substantially complementary with said cylindrical outer surface.

5. A method according to Claim 4 characterised in that said tool holder (5) has an extension lying in a plane transverse to an axis of said tool (4) and extending outwards of the mouth, further comprising the step of rotating said tool holder (5) to orient said extension in a predetermined angular direction.

6. A method according any preceding claim characterised by the step of dimensioning said jig including said positioning member (3, 31, 32) and guide surface (3a, 31a, 32a, 32b) to have a total height in a direction of depth of said channel to be not in excess of 25 mm.

7. A method according to Claim 6, characterised in that said total height is not less than 10 mm.

8. Apparatus for machining a recess (12) adjacent a channel (11) in a bone (13) within a confined space, characterised by
a tool (4) for forming a recess (12);
a jig having a positioning member (3, 31, 32) positionable securely in said channel (12) to provide a guide surface (3a, 31a, 32a, 32b);
a tool holder (5) supporting said tool (4) and having an outer surface adapted to be guided in said guide surface (3a, 31a, 32a, 32b) for locating said tool (4) at a predetermined position relative to said channel (11); and
drive means (51) for operating said tool (4) supported by said holder (5) for forming said recess (12) at said predetermined position.

9. Apparatus according to Claim 8 characterised in that said confined space is in a patient's mouth with the jawbone (13) constituting said bone and said tool holder (5) has an extension lying in a plane transverse to an axis of said tool (4) for extension outside the mouth and wherein said tool holder (5) is rotatable about said tool axis in a range of at least 90° to permit orientation of said extension in a predetermined angular direction.

10. Apparatus according to Claim 8 or to Claim 9 characterised in that said channel (11) includes parallel grooves (110 cut in a patient's jawbone (13) constituting said bone for reception of parallel blade members (1) of a dental implant having a head portion (8) supported at a lower end thereof by the blade members (1), and said positioning member (1,2) includes a plurality of blades to be fittedly accepted in said grooves and bridge member (2) connecting said blades (1) and formed with an aperture (2a) for reception of said tool (4) therethrough, said jig further comprising a guide member for coupling with said bridge (2) and accepting said tool holder (5) with said guide surface.

11. Apparatus according to Claim 10 characterised in that said tool holder (5) has a cylindrical outer surface and said guide surface (3a, 31a, 32a, 32b) of the guide member (3, 31, 32) has a cylindrical surface adapted to substantially complementally accept said cylindrical tool holder (5).

12. Apparatus according to Claim 11 characterised in that said tool holder (5) has a grip handle extending in a plane transverse to said tool (4) and is rotatable about an axis thereof in a range of at least 90° for orienting said grip handle in a desired angular direction.

13. A jig for use in machining a recess (12) adjacent a channel (11) in a bone (13) is a confined space with a tool (4) supported by a tool holder (5) characterised by
a positioning member (3, 31, 32) having a blade member for reception in a the channel (11) and a plate member supporting said blade member; and
a guide member adapted to be coupled with said plate member and providing a guide surface along which said tool holder (5) is adapted to be laterally guided to locate said tool (4) at a predetermined position where said recess (12) is to be formed in said bone.

14. Apparatus according to any one of Claims 8 to 12 or a jig according to Claim 13 characterised in that said jig including said positioning member (3, 31, 32) and said guide surface (3a, 31a, 32a, 32b) has a total height not in excess of 25 mm in a direction of depth of said channel (11).

15. Apparatus according to Claim 14 as dependent upon any one of Claims 8 to 12 characterised in that said tool (14) and said tool holder (5) are dimensioned to have a total height greater than 25 mm in a direction of depth of said recess (12).

16. Apparatus or a jig according to Claim 12 or to Claim 13 characterised in that said total height in said direction is not less than 10 mm.
